(19) **Europäisches Patentamt European Patent Office Office européen des brevets**

(11) **EP 1 134 883 B1**

(12) **FASCICULE DE BREVET EUROPEEN**

(45) Date de publication et mention
de la délivrance du brevet:
**28.10.2009 Bulletin 2009/44**

(51) Int Cl.:
***H02N 2/00*** *(2006.01)*

(21) Numéro de dépôt: **01400606.8**

(22) Date de dépôt: **08.03.2001**

(54) **Moteurs a vibrations**

Vibrationsmotoren

Vibration motors

(84) Etats contractants désignés:
**DE ES FR GB IT**

(30) Priorité: **10.03.2000 FR 0003084**

(43) Date de publication de la demande:
**19.09.2001 Bulletin 2001/38**

(73) Titulaire: **SAGEM Défense Sécurité**
**75015 Paris (FR)**

(72) Inventeurs:
• **Audren, Jean Thierry**
**78470 St Rémy les Chevreuse (FR)**

• **Bezanere, Daniel**
**92160 Antony (FR)**

(74) Mandataire: **Callon de Lamarck, Jean-Robert et al**
**Cabinet Regimbeau**
**20 rue de Chazelles**
**75847 Paris cedex 17 (FR)**

(56) Documents cités:
**EP-A- 0 543 114    EP-A- 0 777 278**
**EP-A- 0 907 213    EP-A- 0 980 102**
**WO-A-96/26551**

## Description

<u>DOMAINE GENERAL DE L'INVENTION</u>

La présente invention est relative aux moteurs à vibrations.

Les moteurs à vibrations sont également connus sous le nom de moteurs ultra-sonores pour faire référence à leur fréquence préférée d'utilisation ou de moteurs piezo-actifs pour faire référence à leur matériau d'excitation préféré.

L'invention trouve à s'appliquer de façon particulièrement avantageuse dans le cas de moteurs à vibrations rotatifs, mais peut également être appliquée pour les actionneurs linéaires, le terme moteur à vibrations désignant dans le présent texte à la fois les moteurs rotatifs et les actionneurs linéaires.

*Rappels sur un exemple de structure possible pour un moteur à vibrations*

Classiquement, un moteur rotatif à vibrations comporte au moins un stator et un rotor, ainsi que des moyens d'excitation pour déformer ledit stator et/ou ledit rotor selon des modes vibratoires combinant des vibrations tangentielles et des vibrations normales aptes à entraîner le rotor selon un mouvement de rotation continu.

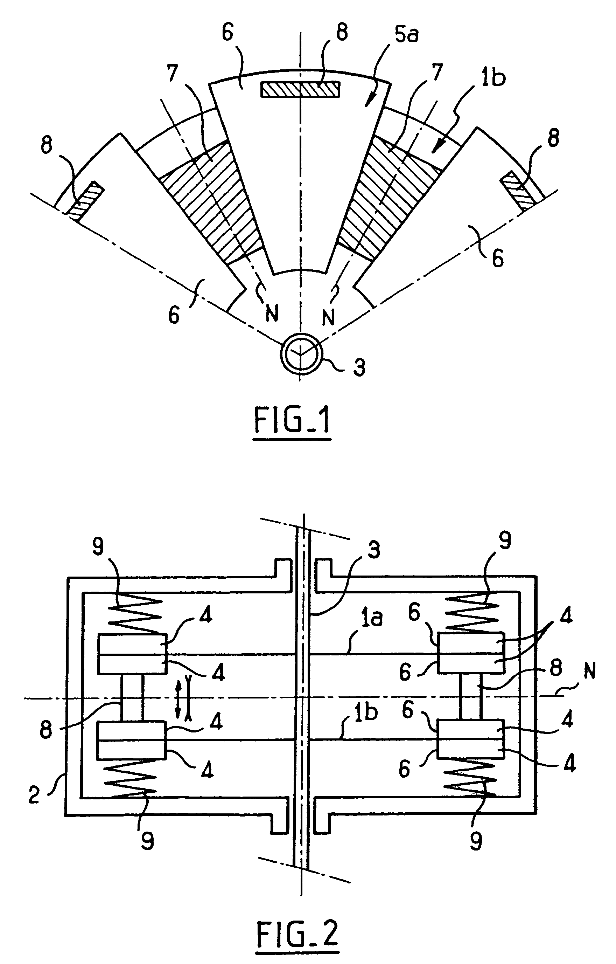

Des structures de moteurs à vibrations particulièrement avantageuses ont notamment été proposées dans les demandes de brevet EP 907 213 et FR 98 10391, auxquelles on pourra avantageusement se référer. Le principe général de ces structures est illustré schématiquement sur les figures 1 et 2.

Un tel moteur comporte, dans une carcasse 2, deux disques de rotor 1 solidaires d'un arbre 3 et des plateaux statoriques 4 entre lesquels lesdits disques 1 sont disposés.

Chaque plateau statorique 4 est constitué d'une pluralité de secteurs de contact 6 (appelés pétales de stator) qui sont répartis annulairement et qui sont séparés deux à deux par des éléments actifs de déformation tangentielle 7 (éléments piézo-électriques ou autres). Les secteurs de contact 6 des deux plateaux 4 intérieurs sont au droit les uns des autres. Des éléments actifs 8 (éléments piézo-électriques ou autres) pour la génération d'une force normale sont interposés entre les secteurs 6 de ces deux plateaux intérieurs 4. Des moyens 9 formant ressort sont interposés entre la carcasse 2 et les secteurs de contact 6 des plateaux 4 extérieurs.

Lorsqu'un élément actif 8 s'allonge, les secteurs de contact 6 au droit desquels il est disposé viennent pincer les disques de rotor 1. Lorsqu'il se rétracte, les secteurs de contact 6 qui lui correspondent relâchent les disques 1.

Deux éléments actifs 7 de part et d'autre d'un même secteur 6 sont excités en opposition de phase. De même, deux éléments actifs 8 voisins sont également excités en opposition de phase. Les éléments actifs 8 pour la génération d'un effort normal et les éléments actifs 7 de déformation tangentielle sont commandés de façon synchrone pour entraîner les rotors 1 en rotation.

<u>ETAT DE LA TECHNIQUE ET PRESENTATION DE L'INVENTION</u>

Un des problèmes rencontrés avec les moteurs à vibrations est celui de leur rendement.

Il a déjà été proposé d'utiliser au niveau d'une zone de contact réciproque entre un rotor et un stator un matériau ayant des propriétés élastiques, de façon à minimiser les dissipations énergétiques liées aux frottements cycliques entre le rotor et le stator.

Notamment, il a été proposé dans la demande de brevet FR 2.742.011 d'utiliser des alliages à mémoire de forme, qui sont des matériaux présentant une super-élasticité non linéaire et qui, par rapport à des matériaux classiques, ont l'avantage de permettre de fortes déformations pour des quantités plus faibles de matériau.

Par super-élasticité, on entend ici et dans tout le présent texte la propriété pour un matériau d'accepter des élongations réversibles de 1% ou supérieures. On rappelle en outre que le caractère non linéaire d'une super-élasticité se traduit par la présence d'un plateau de changement de phase sur la courbe donnant la déformation en fonction de la force de traction.

Il a été montré, dans la demande de brevet FR 2.742.011 précitée qu'une telle structure avait l'avantage d'écrêter la force normale d'appui et de maintenir la force tangentielle de frottement à des valeurs inférieures au seuil de glissement.

Un but de l'invention est d'augmenter encore le rendement des moteurs à vibrations.

On connaît déjà par la demande EP 0 543 114 un actionneur dans lequel les contacts d'appui entre la partie fixe et la partie mobile sont limités au maximum, de sorte que les pertes énergétiques par frottement sont minimisées. Dans la solution proposée dans ce document, la surface de contact de la pièce fixe qui constitue le stator n'est pas rigide, mais est déformée par la propagation d'une onde progressive qui entraîne la pièce mobile qui constitue le rotor. Seul le sommet de la déformation continue est alors en contact avec la pièce entraînée.

On comprend que cette solution ne permet pas les puissances d'entraînement importantes, que permettent les structures de moteurs à vibrations qui, ainsi que cela a été décrit en référence aux figures 1 et 2, fonctionnent sur le principe de la mise en vibrations de secteurs rigides déplacés en bloc et non par déformation continue.

L'invention propose quant à elle une solution qui permet d'augmenter le rendement de moteurs à vibrations du type comportant au moins une pièce fixe et une pièce entraînée en mouvement par rapport à ladite pièce fixe, ainsi que des moyens d'excitation aptes à exercer des efforts tendant à déplacer des secteurs de contact rigides que présente ladite pièce fixe et/ou ladite pièce en mouvement et à faire vibrer ces secteurs rigides selon des modes vibratoires combinant des vibrations tangentielles et des vibrations normales entraînant le déplacement de la pièce en mouvement.

Ledit moteur présentant, pour les vibrations tangentielles ou les vibrations normales, un mode de résonance principal et au moins un mode de résonance secondaire, la solution proposée consiste en ce que ladite pièce fixe et/ou ladite pièce entraînée en mouvement comporte(nt) des différents parties (10,120,121,122, 109) et en ce que le matérieau, la geometrie et les masses des dites parties sont choisies de façon à ce que le mode de résonance secondaire est à une fréquence sensiblement égale à une fréquence harmonique du mode de résonance principal.

Notamment, la pièce en mouvement peut être un rotor à disque rigide, ledit moteur comportant un stator qui comporte au moins une paire de plateaux statoriques, chaque plateau comportant des pétales rigides aptes à recevoir des moyens pour déplacer lesdits pétales rigides tangentiellement et normalement.

En variante, le moteur peut être un actionneur linéaire.

Selon une première variante avantageuse, au moins un élément ayant des propriétés de déformations élastiques est inclus dans la pièce en mouvement et/ou la pièce fixe, ledit élément étant séparé de la face de contact de ladite pièce en mouvement et/ou de ladite pièce fixe par une partie formant patin
et la (ou les) pièce(s) dans laquelle (lesquels) le ou les éléments à déformations élastiques sont inclus est (sont) dimensionnée(s) de telle sorte que la fréquence du mode de résonance tangentiel secondaire - qui est le mode de résonance où la partie formant patin et le reste de la pièce oscillent en opposition de phase - est sensiblement égale à une fréquence qui est une fréquence harmonique du mode de résonance tangentiel principal - où la partie formant patin et le reste de la pièce oscillent en phase.

Un tel moteur est avantageusement complété par les différentes caractéristiques suivantes :

- la fréquence du mode de résonance tangentiel secondaire est sensiblement égale à deux fois la fréquence du mode de résonance tangentiel principal ;
- il comporte un champ d'éléments élastiques interposé entre la partie formant patin et le reste de la pièce fixe et/ou de la pièce en mouvement ;
- un élément élastique est en un matériau présentant des propriétés de super élasticité.

Selon une autre variante également avantageuse, qui peut être réalisée en complément de la première ou indépendamment, le moteur présente une fréquence de résonance normale secondaire qui est sensiblement une fréquence harmonique de la fréquence de résonance normale principale et les moyens d'excitation comportent des moyens pour générer des vibrations normales à l'une et à l'autre de ces deux fréquences de résonance.

Un tel moteur est avantageusement complété par les différentes caractéristiques suivantes prises seules ou selon toutes leurs combinaisons possibles :

- il comporte dans une carcasse au moins deux paires de plateaux statoriques qui comprennent des éléments actifs de déformation tangentielle, ainsi que deux disques de rotor qui s'étendent entre les plateaux de l'une et l'autre des deux paires, des éléments actifs de déformation normale s'étendant notamment entre les plateaux de l'une et l'autre des deux paires qui sont en regard, des moyens formant ressorts étant interposés entre les paires de plateaux et la carcasse,
  et il comporte, interposé entre les plateaux statoriques et les moyens formant ressorts, au moins un ensemble comportant une masse et un élément de déformation élastique, ledit ensemble étant dimensionné, de telle sorte que la fréquence du mode de résonance secondaire - où les plateaux statoriques et ladite masse oscillent en opposition de phase - soit sensiblement égale à un nombre entier de fois la fréquence de résonance principale - où les plateaux statoriques et ladite masse oscillent en phase -, les moyens d'excitation comportant des moyens pour exciter des éléments actifs de déformation normale à une fréquence sensiblement égale à la fréquence de résonance secondaire ;
- un élément de déformation élastique est un élément actif de déformation normale excité à une fréquence sensiblement égale à la fréquence de résonance secondaire ;
- un élément actif de déformation normale pour le mode de résonance principal est excité par un signal qui est la somme d'un signal à la fréquence de résonance principal et d'un signal à la fréquence de résonance secondaire ;
- la fréquence de résonance secondaire est sensiblement égale à un nombre impair de fois la fréquence de résonance principale ;
- la fréquence de résonance secondaire est sensiblement égale à 3 ou 5 fois la fréquence de résonance principale ;
- la fréquence du mode de résonance secondaire est égale à un nombre entier de fois la fréquence de résonance principale, avec une précision de l'ordre de $\frac{1}{2Q}$, où Q représente le coefficient de qualité le plus faible des deux résonances ;
- il comporte, interposé entre les plateaux statoriques et les moyens formant ressorts, au moins un ensemble comportant une masse et plusieurs éléments de déformation élastique dont les raideurs sont telles que ces éléments correspondent à plusieurs fréquences de résonance harmonique.

## PRESENTATION DES FIGURES

D'autres caractéristiques et avantages de l'invention ressortiront encore de la description qui suit, laquelle est purement illustrative et non limitative et doit être lue en regard des dessins annexés sur lesquels :

- les figures 1 et 2, déjà discutées, sont des représentations schématiques respectivement en coupe transversale et en coupe axiale d'un moteur à vibration conforme à un mode de réalisation possible de l'invention,
- la figure 3 est une représentation schématique illustrant la zone de contact réciproque entre une pièce en mouvement et une pièce fixe d'un moteur à vibrations,
- la figure 4 est une représentation schématique du système oscillant auquel la structure de la figure 3 est équivalente,
- les figures 5a à 5c sont des graphes représentant l'évolution temporelle des déformations des différentes couches de la figure 3 (figure 5a), de la vitesse de glissement entre ces couches (figure 5b) et des forces de frottement qui s'exercent entre celle-ci (figure 5c),
- la figure 6 est une représentation similaire à celle de la figure 4 illustrant un autre mode de réalisation possible pour l'invention,
- la figure 7 est une représentation schématique illustrant une structure de moteur à vibrations conforme à un mode de réalisation possible de l'invention,
- la figure 8 est une représentation schématique du système oscillant auquel la liaison entre les pétales statoriques et la carcasse du moteur à vibrations représenté sur la figure 7 est équivalente,
- la figure 9 est un graphe sur lequel on a porté l'évolution de la force d'appui entre un rotor et un stator, d'une part avec une commande conforme à l'état de la technique (courbe en traits pointillés) et d'autre part avec une commande conforme à un mode de mise en oeuvre de l'invention (courbe en traits pleins).

## DESCRIPTION D'UN OU PLUSIEURS MODES DE REALISATIONS POSSIBLES POUR L'INVENTION

L'invention va maintenant être décrite dans le cas d'un moteur rotatif, mais s'appliquerait bien entendu de la même façon dans le cas d'un moteur linéaire.

## MODES DE VIBRATIONS TANGENTIELLES

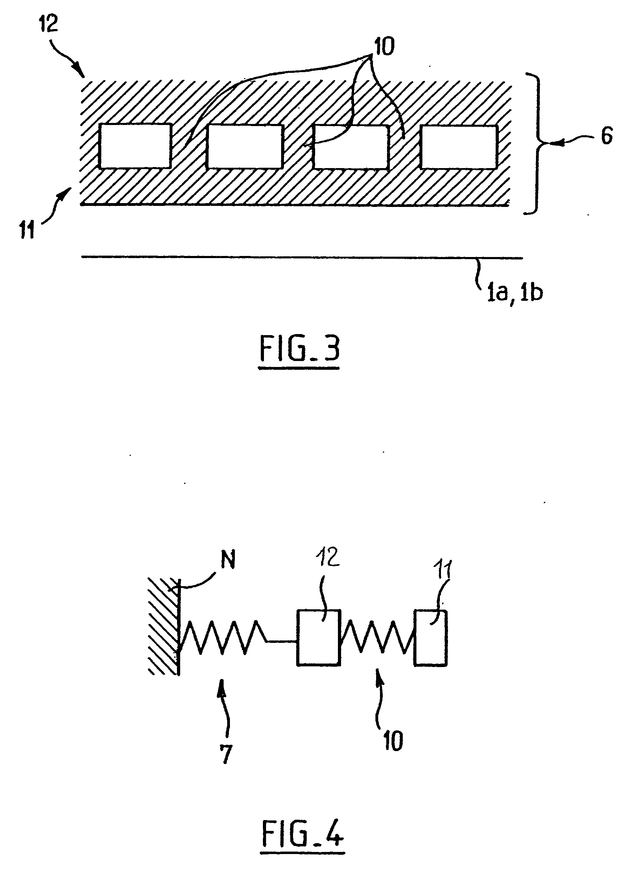

On a représenté sur la figure 3 un exemple de structure possible pour un pétale 6 d'une structure du type de celles représentées sur les figures 1 et 2.

Ce pétale 6 est constitué par un bloc métallique qui comporte une partie principale 12, un patin de contact 11 et un champ d'éléments intermédiaires 10 interposé entre la partie 12 et le patin de contact 11.

Les éléments intermédiaires 10 sont par exemple des pions, de forme cylindrique ou autre, aptes notamment à accepter des déformations en flexion.

En variante, ils peuvent être constitués par des lamelles, notamment des lamelles de forme générale plane, qui s'étendent au repos perpendiculairement au plan général de la partie 12 et qui sont en particulier aptes à se déformer élastiquement en flexion sous l'effet d'un effort déplaçant le patin de contact 11 par rapport à la partie 12 parallèlement au plan général par rapport auquel ils s'étendent.

Les éléments 10 qui constituent la partie élastique interposée entre la partie formant patin 11 et le reste du stator (partie 12) est avantageusement en un polymère semi cristallin et notamment polyéther-éther-acétone (PEEK).

Les polymères semi cristallin et tout particulièrement le PEEK ont l'avantage d'un faible module d'élasticité, d'un grand allongement, d'une excellente résistance à la fatigue et d'une bonne tenue à la température.

La couche intermédiaire élastique peut avec ces matériaux être constituée par une couche pleine ce qui la rend lors facile à réaliser.

La partie principale 12, le patin de contact 11 et les éléments 10 peuvent être moulés d'une pièce en un matériau permettant aux éléments 10 de présenter des propriétés élastiques, tel qu'un acier.

On l'aura compris, dans la structure représentée sur la figure 3, les éléments 10 ne sont pas directement en contact avec le rotor 1a ou 1b, le pétale 6 présentant une partie 11 constituant un patin de contact séparant lesdits éléments 10 du rotor 1a ou 1b sur lequel ledit pétale 6 vient en appui.

Une telle structure est en effet préférable à une structure dans laquelle les pions ou lamelles 10 seraient en contact direct avec le rotor, qui poserait des problèmes de tribologie et dans laquelle la surface de contact serait réduite.

Néanmoins, la présence de la partie 11 formant patin change le comportement dynamique du moteur du fait de sa masse.

Or, il a été constaté que le dimensionnement de la structure ainsi constituée et notamment de la partie 11 formant patin pouvait permettre d'améliorer le rendement de la structure.

Comme l'illustre la figure 4, en effet, une telle structure se modélise, lorsque l'on examine les oscillations tangentielles générées sur le patin 11 par les vibrations engendrées sur les éléments actifs 7, comme un système oscillant présentant :

- une première masse (partie 12 qui constitue la partie principale d'un pétale 6),
- un premier élément élastique (champ d'éléments 10),

- une deuxième masse (partie 11 formant patin),
- un deuxième élément de déformation élastique (élément actif 7) relié à un noeud fixe N, lequel correspond à la zone qui se trouve au milieu d'un élément 7, entre deux pétales 6 successifs.

Un tel système à deux masses et deux raideurs présente deux modes d'oscillations :

- le premier (fréquence F1) qui est le mode de résonance tangentiel principal où la partie 11 formant patin et le reste du pétale 6 (partie 12) oscillent en phase ; la fréquence de ce mode de résonance principal tangentiel est choisie comme fréquence d'excitation pour faire fonctionner le moteur ;
- le second (fréquence F2), qui est le mode de résonance tangentiel secondaire où la partie 11 formant patin et le reste du pétale 6 (partie 12) oscillent en opposition de phase. Pour ce second mode, l'amplitude d'oscillation de la partie 12 du pétale est beaucoup plus faible que l'amplitude d'oscillation de la partie 11 formant patin, car la masse de cette dernière est plus faible.

Or, il est apparu aux inventeurs que le rendement de conversion « vibrations vers mouvement continu » est fortement amélioré lorsque les pétales des stators sont dimensionnés de façon à ce que la fréquence F2 corresponde à une fréquence harmonique de la fréquence F1 (F2 = NF1, avec N entier) et notamment de façon à ce que
F2 = 2F1.

Notamment, il est souhaitable que cette condition F2 = 2F1 soit respectée à mieux que 10%.

Le dimensionnement inclus le choix de la géométrie et des masses des différentes parties des pétales, la répartition de celles-ci et notamment la répartition des éléments 10, etc.

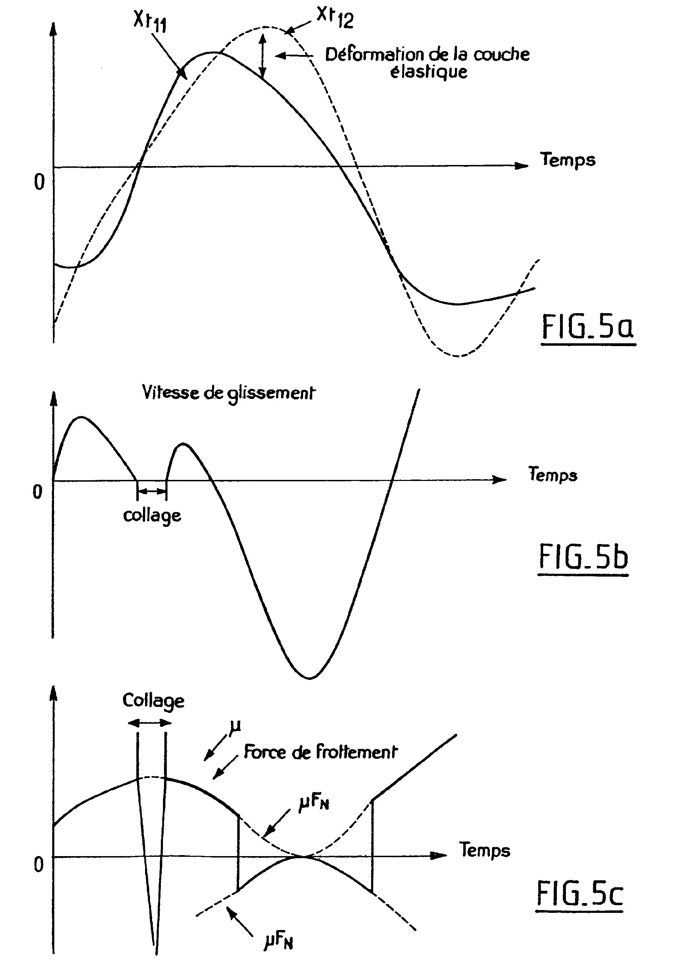

Les courbes présentées sur les figures 5a à 5c montrent que dans ce cas la vitesse du patin reste voisine de la vitesse du rotor pendant une plus grande partie du cycle, minimisant ainsi les pertes de frottement.

Sur la figure 5a, la courbe $Xt_{12}$ représente le déplacement tangentiel de la partie 12 d'un pétale 6 et la courbe $Xt_{11}$ le déplacement tangentiel du patin 11 correspondant.

Sur la figure 5b, on a représenté la courbe de la vitesse de glissement entre le patin 11 et le rotor qu'il entraîne.

Pendant une phase d'entraînement, la vitesse de glissement est d'autant plus minimisée que les éléments 10 et la partie 11 formant patin sont dimensionnés pour que F2= 2F1 ; il y a collage sur une partie importante de cette phase d'entraînement.

Pendant l'autre phase du cycle, la vitesse de glissement devient négative.

Sur la figure 5c, on a représenté l'évolution de la force de frottement entre le stator et le rotor.

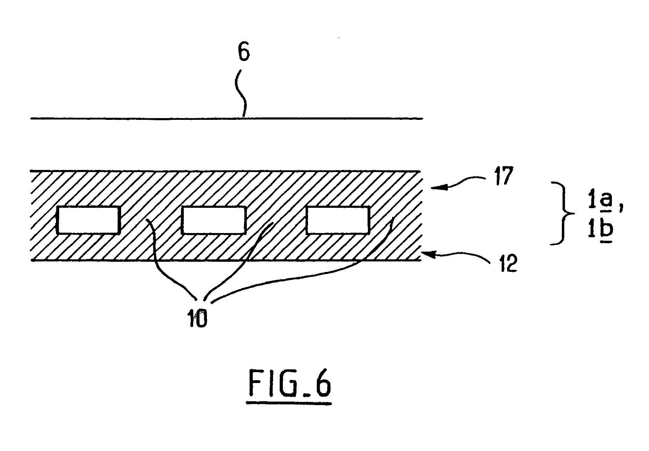

Bien entendu, l'invention s'applique de la même façon lorsque les éléments oscillants sont inclus non pas dans le stator, mais dans le rotor, ainsi que l'illustre la figure 6.

Le rotor est alors dimensionné pour permettre F2 = 2 F1.

Bien entendu, dans tous les cas, les pions ou lamelles 10 sont avantageusement en des matériaux présentant une super-élasticité et notamment une super-élasticité linéaire.

Des matériaux présentant une super-élasticité non linéaire tels que des alliages à mémoire de forme sont également envisageables.

On notera que la description qui précède a été faite dans le cas du mode de réalisation préféré où N=2. D'autres valeurs d'harmoniques permettraient toutefois des effets similaires, mais avec une intensité moins importante. En outre, un harmonique impair produirait des effets d'écrêtage non seulement sur la partie droite de la courbe de la vitesse de glissement (courbe analogue à celle de la figure 5b), mais également sur la partie gauche de celle-ci, ce qui n'est pas utile.

MODES DE VIBRATIONS NORMALES

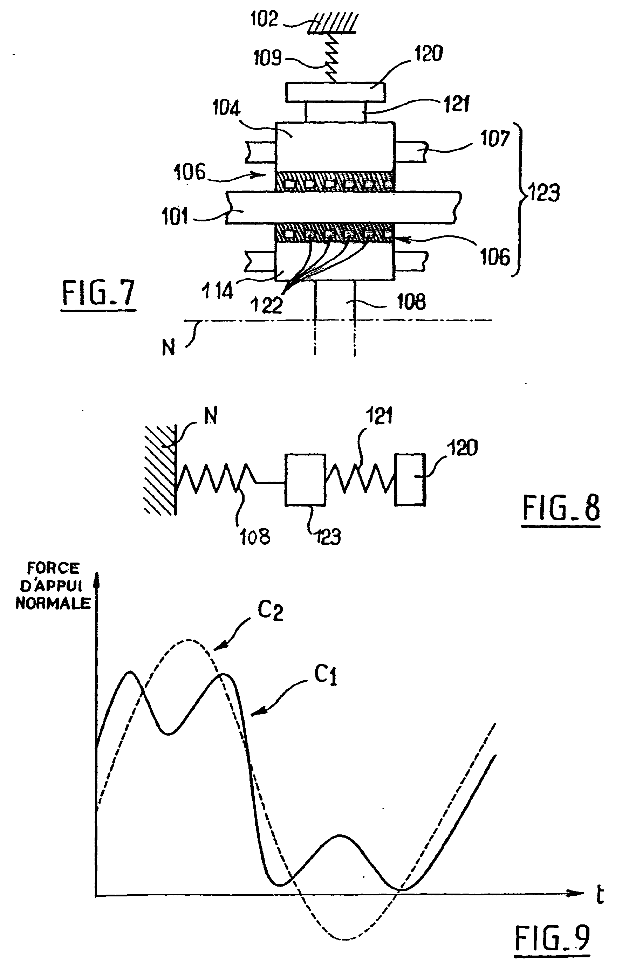

Le moteur à vibrations qui est représenté sur la figure 7 présente une structure similaire à celle représentée sur les figures 1 et 2 et l'on a repris pour les éléments de la structure représentée sur les figures 1 et 2 qui se retrouvent sur cette figure 3 les mêmes numérotations de références augmentées de 100.

Ainsi, la structure représentée sur la figure 7 comporte, dans une carcasse 102, deux plateaux de rotor 101 interposés chacun entre deux plateaux de stator 104.

Les plateaux de stator 104 sont constitués de pétales métalliques 106 séparés par des éléments actifs de déformation tangentielle 107.

Un pétale 106 est avantageusement un pétale métallique dans lequel est inclus au moins un élément élastiquement déformable. Par exemple, le pétale 106 inclus au voisinage de sa surface de contact un champ d'éléments 122 tels que des pions ou des lamelles, ces éléments 122 étant préférentiellement séparés de la surface de contact du pétale par une partie de celui-ci qui forme patin.

Des éléments actifs 108 de déformation normale sont interposés entre les pétales 106 des deux plateaux 104 de stator internes (c'est à dire des deux plateaux de stator qui sont compris entre les deux autres, lesquels constituent les plateaux de stator externes).

Des moyens formant ressorts 109 sont interposés entre la carcasse 102 du moteur et les pétales 106 des deux plateaux 104 de stator externes.

Plus précisément, chaque pétale 106 des plateaux de stator externes porte une masse 120 complémentaire qui est montée sur ledit pétale par l'intermédiaire d'un élément actif de déformation normal 121 (en un matériau piézo-électrique par exemple), les moyens 109 formant ressort venant en appui sur ladite masse 120.

Une telle structure se modélise comme un système oscillant présentant :

- une première masse (la masse 120),
- un premier élément de déformation élastique (l'élément actif 121),
- une deuxième masse, référencée par 123 (correspondant à deux pétales 106 de part et d'autre de la portion de rotor 101 qui leur correspond),
- un deuxième élément de déformation élastique (portion d'un élément 108 qui s'étend entre ladite masse 123 et le plan médian N des éléments 108, ce plan médian étant considéré comme un noeud fixe du système).

Un tel système à deux masses et deux raideurs présente deux modes d'oscillations :

- le premier (fréquence F1) qui est le mode de résonance normale principal où les masses 120 et 123 oscillent en phase ; la fréquence de ce mode de résonance est choisie comme fréquence d'excitation pour les éléments actifs 107, 108 de déformation tangentielle et normale, le moteur comportant des moyens d'excitation à cet effet ;
- le second (fréquence F2), qui est le mode de résonance normale secondaire où les masses 120 et 123 oscillent en opposition de phase.

La masse 120 et l'élément actif 121 sont dimensionnés (géométrie, masse, matériau, etc.) pour que la fréquence F2 soit égale à N*F1, où N est un nombre, tandis que le moteur comporte des moyens pour exciter ledit élément actif 121 à cette fréquence F2.

Avantageusement notamment, N est choisi impair.

La force d'appui alors obtenue est celle qui est représentée sur la figure 5 (courbe C1 en traits pleins) et qui est sensiblement écrêtée par rapport à celle obtenue avec la seule excitation des éléments actifs 107 et 108 à la fréquence F1 (courbe C2 en traits mixtes).

On notera que lorsque N est pair, l'effet d'écrêtage est également obtenu, mais sur un côté du cycle seulement, seule la partie haute étant écrêtée.

Notamment, on choisit préférentiellement N=3 ou N=5, les harmoniques de rang faible permettant les effets les plus importants.

Des valeurs de N différentes de N=3 ou de N=5 sont néanmoins possibles.

Du fait que le mode normal est beaucoup moins amorti que le mode tangentiel, l'égalité F2=NF1 devra préférentiellement être réalisée avec une grande précision. On estime la précision nécessaire de l'ordre de

$$\frac{1}{2Q}$$, où Q représente le coefficient de qualité le plus faible des deux résonances.

Une variante de la solution décrite précédemment consiste à remplacer le pavé ou élément actif 121 par une raideur équivalente passive et à alimenter l'actionneur principal avec une excitation de fréquence N F1 s'ajoutant à l'excitation fondamentale à la fréquence F1.

Par ailleurs, selon une autre variante également avantageuse, il peut être prévu entre une masse 120 et le reste d'un pétale 106 une pluralité d'éléments 109 à déformation élastique présentant des raideurs différentes et correspondant par conséquent à des modes de résonance secondaires différents, ces éléments étant choisis pour que leur fréquence corresponde à un harmonique de la fréquence principale.

En combinant les fréquences d'excitation correspondant à ces différents harmoniques, il est possible d'obtenir des forces d'appui normal encore plus écrêtées que celle représentée sur la figure 9.

De nombreuses autres variantes de réalisation permettant un mode de résonance principale et au moins un mode de résonance secondaire tels que leurs fréquences de résonance respectives sont telles que F2 = NF1 sont envisageables.

**Revendications**

1. Moteur à vibrations comportant au moins une pièce fixe (4, 104) et une pièce entraînée (1a,1b,101) en mouvement par rapport à ladite pièce fixe, ainsi que des moyens d'excitation aptes à exercer des efforts tendant à déplacer des secteurs de contact rigides (7,8,107,108) que présente ladite pièce fixe et/ou ladite pièce en mouvement et à faire vibrer ces secteurs rigides selon des modes vibratoires combinant des vibrations tangentielles et des vibrations normales entraînant le déplacement de la pièce en mouvement, ledit moteur présentant, pour les vibrations tangentielles ou les vibrations normales, un mode de résonance principal et au moins un mode de résonance secondaire, **caractérisé en ce que** ladite pièce fixe et/ou ladite pièce entraînée en mouvement comporte(nt) des différents parties (10,120,121,122, 109) et **en ce que** le matérieau, la geometrie et les masses des dites parties sont choisies de façon à ce que le mode de résonance secondaire est à une fréquence sensiblement égale à une fréquence harmonique du mode de résonance principal.

2. Moteur selon la revendication 1, **caractérisé en ce que** la pièce en mouvement est un rotor (1a,1b,101) à disque rigide, ledit moteur comportant un stator (4,104) qui comporte au moins une paire de plateaux statoriques (4,104), chaque plateau comportant des pétales (6,106) rigides aptes à recevoir des moyens pour déplacer lesdits pétales rigides tangentiellement et normalement.

3. Moteur selon la revendication 1, **caractérisé en ce qu'**au moins un élément (10,122) ayant des propriétés de déformations élastiques est inclus dans la pièce en mouvement et/ou la pièce fixe, ledit élément étant séparé de la face de contact de ladite pièce en mouvement et/ou de ladite pièce fixe par une partie (11) formant patin
et **en ce que** la (ou les) pièce(s) (6) dans laquelle (lesquels) le ou les éléments à déformations élastiques (10) sont inclus est (sont) dimensionnée(s) de telle sorte que la fréquence du mode de résonance tangentiel secondaire- qui est le mode de résonance où la partie formant patin (11) et le reste de la pièce oscillent en opposition de phase - est sensiblement égale à une fréquence qui est une fréquence harmonique du mode de résonance tangentiel principal - où la partie formant patin et le reste de la pièce oscillent en phase

4. Moteur selon la revendication 3, **caractérisé en ce que** la fréquence du mode de résonance tangentiel secondaire est sensiblement égale à deux fois la fréquence du mode de résonance tangentiel principal.

5. Moteur selon l'une des revendication 3 ou 4, **caractérisé en ce qu'**il comporte un champ d'éléments élastiques interposé entre la partie formant patin (11) et le reste de la pièce fixe et/ou de la pièce en mouvement.

6. Moteur selon l'une des revendications 3 à 5, **caractérisé en ce qu'**un élément élastique (10,122) est en un matériau présentant des propriétés de super élasticité.

7. Moteur selon la revendication 1, **caractérisé en ce qu'**il présente une fréquence de résonance normale secondaire qui est sensiblement une fréquence harmonique de la fréquence de résonance normale principale et **en ce que** les moyens d'excitation comportent des moyens pour générer des vibrations normales à l'une et à l'autre de ces deux fréquences de résonance.

8. Moteur selon les revendications 2 et 7, **caractérisé en ce qu'**il comporte dans une carcasse au moins deux paires de plateaux statoriques (104) qui comprennent des éléments actifs de déformation tangentielle (107), ainsi que deux disques de rotor (101) qui s'étendent entre les plateaux de l'une et l'autre des deux paires, des éléments actifs de déformation normale (122) s'étendant notamment entre les plateaux de l'une et l'autre des deux paires qui sont en regard, des moyens formant ressorts (109) étant interposés entre les paires de plateaux et la carcasse, **en ce qu'**il comporte, interposé entre les plateaux statoriques (104) et les moyens formant ressorts (109), au moins un ensemble comportant une masse (120) et un élément de déformation élastique (121), ledit ensemble étant dimensionné, de telle sorte que la fréquence du mode de résonance secondaire - où les plateaux statoriques (104,123) et ladite masse (120) oscillent en opposition de phase - soit sensiblement égale à un nombre entier de fois la fréquence de résonance principale - où les plateaux statoriques et ladite masse oscillent en phase -, les moyens d'excitation comportant des moyens pour exciter des éléments actifs de déformation normale à une fréquence sensiblement égale à la fréquence de résonance secondaire.

9. Moteur selon la revendication 8, **caractérisé en ce qu'**un élément de déformation élastique est un élément actif de déformation normale (108) excité à une fréquence sensiblement égale à la fréquence de résonance secondaire.

10. Moteur selon la revendication 8, **caractérisé en ce qu'**un élément actif de déformation normale pour le mode de résonance principal est excité par un signal qui est la somme d'un signal à la fréquence de résonance principal et d'un signal à la fréquence de résonance secondaire.

11. Moteur selon l'une des revendications 7 à 10, **caractérisé en ce que** la fréquence de résonance secondaire est sensiblement égale à un nombre impair de fois la fréquence de résonance principale.

12. Moteur selon la revendication 7, **caractérisé en ce que** la fréquence de résonance secondaire est sensiblement égale à 3 ou 5 fois la fréquence de résonance principale.

13. Moteur selon l'une des revendications 7 à 12, **caractérisé en ce que** la fréquence du mode de résonance secondaire est égale à un nombre entier de fois la fréquence de résonance principale, avec une précision de l'ordre de $\dfrac{1}{2Q}$, où Q représente le coefficient de qualité le plus faible des deux résonances.

14. Moteur selon la revendication 8, **caractérisé en ce qu'**il comporte, interposé entre les plateaux statoriques (104) et les moyens formant ressorts, au moins un ensemble comportant une masse (120) et plusieurs éléments de déformation élastique (121) dont les raideurs sont telles que ces éléments correspondent à plusieurs fréquences de résonance harmonique.

**15.** Moteur selon la revendication 3, **caractérisé en ce que** le ou les éléments de déformation élastiques sont en polymère semi - cristallin.

## Claims

**1.** A vibration motor comprising at least one stationary part (4, 104) and one part driven (1a, 1b, 101) to move relative to said fixed part, together with excitation means suitable for exerting forces that tend to move rigid contact sectors (7, 8, 107, 108) presented by said fixed part and/or said moving part and to cause said rigid sectors to vibrate in vibration modes that combine tangential vibrations and normal vibrations, thereby driving the movement of the moving part, said motor presenting for the tangential vibrations or the normal vibrations a main resonant mode and at least one secondary resonant mode, the motor being **characterized in that** said stationary part and/or said part driven to move comprise(s) different portions (10, 120, 121, 122, 109) and **in that** the material, the shape, and the masses of said portions are selected in such a manner that the secondary resonant mode is at a frequency that is substantially equal to a harmonic frequency of the main resonant mode.

**2.** A motor according to claim 1, **characterized in that** the moving part is a rigid disk rotor (1a, 1b, 101), said motor having a stator (4, 104) which comprises at least one pair of stator plates (4, 104), each plate having rigid petals (6, 106) adapted to receive means for moving said rigid petals tangentially and normally.

**3.** A motor according to claim 1, **characterized in that** at least one element (10, 122) having elastic deformation properties is included in the moving part and/or the stationary part, said element being separated from the contact face of said moving part and/or of said fixed part by a shoe-forming portion (11), and
**in that** the part(s) (6) in which the elastic deformation elements (10) are included is/are dimensioned in such a manner that the frequency of the secondary tangential resonant mode which is the resonant mode in which the shoe-forming portion (11) and the remainder of the part oscillate in phase opposition, is substantially equal to a frequency which is a harmonic frequency of the main tangential resonant mode, in which the shoe-forming portion and the remainder of the part oscillate in phase.

**4.** A motor according to claim 3, **characterized in that** the frequency of the secondary tangential resonant mode is substantially equal to twice the frequency of the main tangential resonant mode.

**5.** A motor according to claim 3 or 4, **characterized in that** it includes an array of elastic elements interposed between the shoe-forming portion (11) and the remainder of the stationary part and/or the moving part.

**6.** A motor according to any one of claims 3 to 5, **characterized in that** the elastic element (10, 122) is made of a material presenting properties of superelasticity.

**7.** A motor according to claim 1, **characterized in that** it presents a secondary normal resonant frequency which is substantially a harmonic frequency of the main normal resonant frequency, and **in that** the excitation means comprise means for generating normal vibrations at both of these two resonant frequencies.

**8.** A motor according to claims 2 and 7, **characterized in that** it comprises a casing containing at least two pairs of stator plates (104) having tangential deformation active elements (107), and two rotor disks (101) which extend between the plates of respective ones of said two pairs, the normal deformation active elements (122) extending in particular between the plates of both of the two facing pairs, spring-forming means (109) being interposed between the pairs of plates and the casing, and
**in that** it includes, between the stator plates (104) and the spring-forming means (109), at least one assembly comprising a mass (120) and an elastic deformation element (121), said assembly being dimensioned in such a manner that the frequency of the secondary resonant mode in which the stator plates (104, 223) and said mass oscillate (120) in phase opposition, is substantially equal to an integer number of times of the main resonant frequency in which the stator plates and said mass oscillate in phase, the excitation means including means for exciting normal deformation active elements at a frequency which is substantially equal to the secondary resonant frequency.

**9.** A motor according to claim 8, **characterized in that** an elastic deformation element is a normal deformation active element (108) excited at a frequency substantially equal to the secondary resonant frequency.

**10.** A motor according to claim 8, **characterized in that** a normal deformation active element for the main resonant mode is excited by a signal which is the sum of a signal at the main resonant frequency plus a signal at the secondary resonant frequency.

**11.** A motor according to any one of claims 7 to 10, **characterized in that** the secondary resonant frequency is substantially equal to an odd number of times of the main resonant frequency.

**12.** A motor according to claim 7, **characterized in that** the secondary resonant frequency is substantially equal to three or five times the main resonant frequency.

**13.** A motor according to any one of claims 7 to 12, **characterized in that** the frequency of the secondary resonant mode is equal to an integer number of times of the main resonant frequency, with an accuracy of the order of $\dfrac{1}{2Q}$ where Q is the lowest quality factor of the two resonances.

**14.** A motor according to claim 8, **characterized in that** it includes at least one assembly comprising a mass (120) and a plurality of elastic deformation elements (121) interposed between the stator plates (104) and the spring-forming means, the elastic deformation elements being of stiffnesses such that said elements correspond to a plurality of harmonic resonant frequencies.

**15.** A motor according to claim 3, **characterized in that** the elastic deformation element(s) is/are made of semicrystalline polymer.

**Patentansprüche**

**1.** Vibrationsmotor, umfassend wenigstens ein festes Teil (4, 104) und ein zur Bewegung bezüglich des festen Teils angetriebenes Teil (1a, 1b, 101) sowie Anregungsmittel, die ausgelegt sind, Kräfte auszuüben, die dazu neigen, starre Kontaktbereiche (7, 8, 107, 108) zu bewegen, die das feste Teil und/oder das Teil in Bewegung aufweist und diese Bereiche gemäß Vibrationsmoden vibrieren zu lassen, die tangentiale Vibrationen und zur Tangente senkrechte Vibrationen kombinieren, die die Verschiebung des Teils in Bewegung verursachen, wobei der Motor für die tangentialen oder die zur Tangente senkrechten Vibrationen eine Hauptresonanzmode und wenigstens eine Nebenresonanzmode aufweist, **dadurch gekennzeichnet, dass** das feste Teil und/oder das zur Bewegung angetriebene Teil verschiedene Abschnitte (10, 120, 121, 122, 109) umfassen und dass das Material, die Geometrie und die Massen der Abschnitte derart gewählt sind, dass die Nebenresonanzmode bei einer Frequenz im Wesentlichen gleich einer Oberschwingungsfrequenz der Hauptresonanzmode ist.

**2.** Motor gemäß Anspruch 1, **dadurch gekennzeichnet, dass** das Teil in Bewegung ein Rotor (1a, 1b, 101) mit starrer Scheibe ist, wobei der Motor einen Stator (4, 104) umfasst, der wenigstens ein Paar Statorplatten (4, 104) umfasst, wobei jede Platte starre Blätter (6, 106) aufweist, die ausgelegt sind, um Mittel aufzunehmen, um die starren Blätter tangential und senkrecht zur Tangente zu verschieben.

**3.** Motor gemäß Anspruch 1, **dadurch gekennzeichnet, dass** wenigstens ein Element (10, 122), das elastische Deformationseigenschaften hat, in dem Teil in Bewegung und/oder dem festen Teil eingeschlossen ist, wobei das Element von der Kontaktfläche des Teils in Bewegung und/oder des festen Teils durch einen kufenbildenden Abschnitt (11) getrennt ist,
und dass das (oder die) Teil(e) (6), in dem/denen das oder die Element(e) zur elastischen Deformation (10) eingeschlossen sind, derart dimensioniert ist/sind, dass die Frequenz der tangentialen Nebenresonanzmode - die die Resonanzmode ist, bei der der kufenbildende Abschnitt und der Rest des Teils phasenversetzt oszillieren - im Wesentlichen gleich einer Frequenz ist, die eine Oberschwingungsfrequenz der tangentialen Hauptresonanzmode ist - wobei der kufenbildende Abschnitt und der Rest des Teils phasengleich oszillieren.

**4.** Motor gemäß Anspruch 3, **dadurch gekennzeichnet, dass** die Frequenz der tangentialen Nebenresonanzmode im Wesentlichen gleich zwei Mal die Frequenz der tangentialen Hauptresonanzmode ist.

**5.** Motor gemäß einem der Ansprüche 3 oder 4, **dadurch gekennzeichnet, dass** er ein Feld elastischer Elemente umfasst, das zwischen den kufenbildenden Abschnitt (11) und den Rest des festen Teils und/oder des Teils in Bewegung gestellt ist.

**6.** Motor gemäß einem der Ansprüche 3 bis 5, **dadurch gekennzeichnet, dass** ein elastisches Element (10, 122) aus einem Material ist, das super-elastische Eigenschaften aufweist.

**7.** Motor gemäß Anspruch 1, **dadurch gekennzeichnet, dass** er eine zur Tangente senkrechte Nebenresonanzfrequenz aufweist, die im Wesentlichen gleich einer Oberschwingungsfrequenz der senkrechten Hauptresonanzfrequenz ist und dass die Anregungsmittel Mittel umfassen, um Vibrationen zu erzeugen, die senkrecht zur Tangente der einen und der anderen dieser beiden Resonanzfrequenzen sind.

**8.** Motor gemäß den Ansprüchen 2 bis 7, **dadurch gekennzeichnet, dass** er in einem Gehäuse wenigstens zwei Paare von Statorplatten (104) umfasst, die aktive Elemente zur tangentialen Deformation (107) umfassen, sowie zwei Rotorscheiben (101), die sich zwischen den Platten von dem einen und dem anderen der beiden Paare erstrecken, wobei aktive Elemente sich zur zur Tangente senkrechten Deformation (122) insbesondere zwischen den Platten von dem einen und dem anderen der beiden Paare erstrecken, die gegenüber sind, wobei federnbildende Mittel (109) zwischen die Plattenpaare und das Gehäuse gestellt sind,
dass er, zwischen die Statorplatten (104) und die federnbildenden Mittel (109) gesetzt, wenigstens eine Konstruktion umfasst, die eine Masse (120) und ein Element zur elastischen Deformation (121) umfasst, wobei die Konstruktion derart dimensioniert ist, dass die Frequenz der Nebenresonanzmode - wobei die Statorplatten (104, 123) und die Masse (120) phasenversetzt oszillieren - im Wesentlichen gleich einer ganzen Zahl Mal die Hauptresonanzfrequenz ist - wobei die Statorplatten und die Masse phasengleich oszillieren -, wobei die Anregungsmittel Mittel umfassen, um aktive Elemente zur zur Tangente senkrechten Deformation bei einer Frequenz im Wesentlichen gleich der Nebenresonanzfrequenz anzuregen.

9. Motor gemäß Anspruch 8, **dadurch gekennzeichnet, dass** ein Element zur elastischen Deformation ein aktives Element zur Tangente senkrechten Deformation (108) ist, das bei einer Frequenz im Wesentlichen gleich der Nebenresonanzfrequenz angeregt wird.

10. Motor gemäß Anspruch 8, **dadurch gekennzeichnet, dass** ein aktives Element zur senkrechten Deformation für die Hauptresonanzmode von einem Signal angeregt wird, das die Summe eines Signals bei der Hauptresonanzfrequenz und eines Signals bei der Nebenresonanzfrequenz ist.

11. Motor gemäß einem der Ansprüche 7 bis 10, **dadurch gekennzeichnet, dass** die Nebenresonanzfrequenz im Wesentlichen gleich einer ungeraden Anzahl Mal die Hauptresonanzfrequenz ist.

12. Motor gemäß Anspruch 7, **dadurch gekennzeichnet, dass** die Nebenresonanzfrequenz im Wesentlichen gleich 3 oder 5 Mal die Hauptresonanzfrequenz ist.

13. Motor gemäß einem der Ansprüche 7 bis 12, **dadurch gekennzeichnet, dass** die Frequenz der Nebenresonanzmode gleich eine ganze Anzahl Mal die Hauptresonanzfrequenz ist, mit einer Präzision in der Größenordnung von $\frac{1}{2Q}$, wobei Q den schwächsten Qualitätskoeffizienten der beiden Resonanzen darstellt.

14. Motor gemäß Anspruch 8, **dadurch gekennzeichnet, dass** er, zwischen die Statorplatten (104) und die federnbildenden Mittel gestellt, wenigstens eine Konstruktion umfasst, die eine Masse (120) und mehrere Elemente zur elastischen Deformation (121) umfasst, deren Steifheiten derart sind, dass diese Elemente mehreren harmonischen Resonanzfrequenzen entsprechen.

15. Motor gemäß Anspruch 3, **dadurch gekennzeichnet, dass** das oder die Elemente zur elastischen Deformation aus einem semi-kristallinen Polymer sind.

FIG.1

FIG.2

FIG_3

FIG_4

**FIG.5a**

$Xr_{11}$ $Xr_{12}$ Déformation de la couche élastique
Temps
0

**FIG.5b**

Vitesse de glissement
Temps
0
collage

**FIG.5c**

Collage
$\mu$
Force de frottement
$\mu F_N$
Temps
0
$\mu F_N$

FIG.6

FIG.7

FIG.8

FORCE
D'APPUI
NORMALE

C2

C1

t

FIG.9

## RÉFÉRENCES CITÉES DANS LA DESCRIPTION

*Cette liste de références citées par le demandeur vise uniquement à aider le lecteur et ne fait pas partie du document de brevet européen. Même si le plus grand soin a été accordé à sa conception, des erreurs ou des omissions ne peuvent être exclues et l'OEB décline toute responsabilité à cet égard.*

**Documents brevets cités dans la description**

- EP 907213 A
- FR 9810391
- FR 2742011
- EP 0543114 A